# EUROPEAN PATENT APPLICATION

(11) **EP 4 335 701 A1**
(43) Date of publication of application: **13.03.2024**
(21) Application number: 22194472.1
(22) Date of filing: 07.09.2022
(51) Int. Cl.: B60R 3/02, B62D 33/06

(54) **VEHICLE COMPRISING A LADDER**

(71) Applicant: Scania CV AB, 151 87 Södertälje (SE)
(72) Inventor: BERGGREN, Daniel, 120 57 Årsta (SE); COLLING, Morgan, 153 94 Hölö (SE); MARTINSSON, Niklas, 151 47 Södertälje (SE); HENRIKSEN, Christian, 165 76 Hässelby (SE); ERIKSSON, Mikael, 149 45 NYNÄSHAMN (SE)
(74) Representative: Scania CV AB

(57) **Abstract**

A vehicle (2) is disclosed comprising a vehicle body (3), a ladder (4) pivotally mounted to the vehicle body (3) around a pivot axis (Pa) between a storage position and a use position, a hinge arrangement (6), and a body panel (5) movably attached to the vehicle body (3) via the hinge arrangement (6) between an open and a closed position. The body panel (5) and the ladder (4) are arranged such that the body panel (5) covers the ladder (4) as seen along a lateral direction (la) of the vehicle (2) when the body panel (5) is in the closed position and the ladder (4) is in the storage position.

## Description

### TECHNICAL FIELD

The present disclosure relates to a vehicle comprising a vehicle body and a ladder pivotally mounted to the vehicle body.

### BACKGROUND

Heavier types of vehicles, such as trucks, lorries, and the like, normally comprise a vehicle frame, a cab mounted to the vehicle frame and a cargo compartment mounted to the vehicle frame at a position behind the cab as seen in a forward moving direction of the vehicle.

Moreover, some of these types of vehicles comprise an air deflector arrangement arranged between the cab and the cargo compartment. An air deflector arrangement typically comprises a set of air deflectors configured to deflect air around edges of the cargo compartment during travelling of the vehicle in the forward moving direction. In this manner, the air-resistance of the vehicle, as well as wind noise, can be reduced upon movement of the vehicle in the forward moving direction.

Technical development has led to an increased number of systems and components packed into vehicles. For example, the current trend of electrification of vehicles has increased this number significantly. Electrified vehicles can be divided into the categories pure electric vehicles and hybrid electric vehicles. Pure electric vehicles, sometimes referred to as battery electric vehicles, only-electric vehicles, and all-electric vehicles, comprise a pure electric powertrain and comprise no internal combustion engine and therefore produce no emissions in the place where they are used.

A hybrid electric vehicle comprises two or more distinct types of power, such as an internal combustion engine and an electric propulsion system. The combination of an internal combustion engine and an electric propulsion system provides advantages with regard to energy efficiency, partly because of the poor energy efficiency of an internal combustion engine at lower power output levels. Moreover, some hybrid electric vehicles are capable of operating in pure electric drive when wanted, such as when driving in certain areas requiring low noise levels and/or low emission levels.

The electricity is usually stored in a number of propulsion batteries each comprising a number of rechargeable battery cells. Some different types of battery cells are used, such as lithium-ion battery cells, lithium polymer battery cells, as well as other types of rechargeable battery cells. A problem associated with at least partially electric vehicles is that the propulsion batteries occupy a lot of space which can cause packing problems, especially in heavier types of vehicles which normally requires a large number of battery cells to ensure a sufficient available operational range of a vehicle, system voltage, and power.

In some vehicles, it is desired to enable users to access certain parts and areas of the vehicle that are not normally used when driving the vehicle. An example of such an area is the space located above the vehicle frame and behind the cab of a heavier type of vehicle. It may for example be desired to access this type of space when wanting to perform service, repair, and maintenance of components of the vehicle.

Current solutions to enable users and service personnel to access this space without using external equipment, such as a portable ladder, a stool, or the like, is to provide the vehicle with a number of steps at the side of the vehicle together forming a small staircase allowing a user to walk up the staircase to the space located above the vehicle frame behind the cab.

This type of solution normally restricts the installation space of other types of components, systems, and arrangements. As an example, a staircase as described above can prevent the assembly of a propulsion battery onto the vehicle frame at the location of the staircase. Moreover, with this type of solution, it is difficult to obtain a user-friendly staircase allowing users to reach the space above the vehicle frame in an ergonomic, convenient, and safe manner without significantly reducing the installation space for other components, systems, and arrangements on the vehicle. One reason for this is that if parts of the staircase protrude out from the sides of the vehicle, the protruding parts may pose a danger to pedestrians and other road users. Therefore, in current solutions, the small staircase referred to above, resembles a ladder where users must climb at least essentially vertically up to the space above the vehicle frame. Moreover, even if no parts of the staircase protrudes out from the sides of the vehicle, this type of solution may pose a danger to pedestrians and other road users for example upon an impact between a pedestrian/road user and the vehicle at an angle towards the side of the vehicle where the staircase is located.

Another current solution for enabling users to access the space above the vehicle frame and behind the cab, is to provide the vehicle with a ladder slidably arranged to the vehicle frame between a storage position and a use position. Such a solution may have less negative impact on the installation space of other components, systems, and arrangements as compared to the fixedly mounted small staircase referred to above.

However, with this type of solution, it is difficult to obtain a user-friendly ladder allowing users to reach the space above the vehicle frame in an ergonomic, safe, and convenient manner. One reason for this is that due to the sliding feature of the ladder, the ladder must normally have a straight shape which requires users to climb at least essentially vertically when the ladder is in the use position.

Moreover, with this type of solution, it may be difficult to obtain a safe ladder arrangement. That is, if a user forgets to slide the ladder back to the storage position before driving away with the vehicle, or if the ladder accidentally slides from the storage position to the use position during travelling, the ladder will pose a danger to pedestrians and other road users. Furthermore, the ladder may pose a danger to pedestrians and other road users also when the ladder is in the storage position, for example upon an impact between a pedestrian/road user and the vehicle at an angle towards the side of the vehicle where the ladder is located.

Furthermore, generally, when designing vehicle arrangements, it is an advantage if the arrangement is designed such that it can be used in a simple and intuitive manner. Moreover, it is an advantage if the arrangement is made robust and durable and if points of failure of the arrangement can be minimized.

### SUMMARY

It is an object of the present invention to overcome, or at least alleviate, at least some of the above-mentioned problems and drawbacks.

According to an aspect of the invention, the object is achieved by a vehicle comprising a vehicle body, a ladder pivotally mounted to the vehicle body around a pivot axis between a storage position and a use position, a hinge arrangement, and a body panel movably attached to the vehicle body via the hinge arrangement between an open and a closed position. The body panel and the ladder are arranged such that the body panel covers the ladder as seen along a lateral direction of the vehicle towards the vehicle when the body panel is in the closed position and the ladder is in the storage position.

Since the body panel covers the ladder as seen along the lateral direction of the vehicle towards the vehicle when the body panel is in the closed position and the ladder is in the storage position, no portions of the ladder protrudes further out from lateral sides of the vehicle than the body panel when the body panel is in the closed position and the ladder is in the storage position. Thus, due to these features, a safer solution is provided allowing a user to access a particular area or space of the vehicle without having to use external equipment for accessing the area.

Moreover, since the body panel covers the ladder as seen along the lateral direction of the vehicle towards the vehicle, the body panel can act as a shield between the ladder and an object, such as a pedestrian or other type of road user, upon an impact between the object and the vehicle from the side of the vehicle. Such an impact may for example occur during turning of the vehicle causing an impact at an angle from the side of the vehicle, as well as if the object hits the vehicle at an angle from the side of the vehicle. Thus, also for this reason, a safer solution is provided allowing a user to access a particular area or space of the vehicle without having to use external equipment for accessing the area.

Furthermore, since the body panel covers the ladder as seen along the lateral direction of the vehicle, the body panel can prevent unintended movement of the ladder from the storage position to the use position when the body panel is in the closed position. Accordingly, also for this reason, a safer solution is provided allowing a user to access a particular area or space of the vehicle without having to use external equipment.

In addition, since the ladder is pivotally mounted to the vehicle body around the pivot axis between the storage position and the use position, the solution provides conditions for no, or at least a low, impact on the installation space for other components, systems, and arrangements on the vehicle.

Furthermore, since the ladder is pivotally mounted to the vehicle body around the pivot axis between the storage position and the use position, a vehicle is provided with a ladder having conditions for being used in an intuitive, safe, and convenient manner to access a particular area or space of the vehicle without having to use external equipment for accessing the area.

Moreover, since the ladder is pivotally mounted to the vehicle body around the pivot axis between the storage position and the use position, the solution has conditions for being robust and durable while allowing users to access a particular area or space of the vehicle without having to use external equipment.

Accordingly, a vehicle is provided overcoming, or at least alleviating, at least some of the above-mentioned problems and drawbacks. As a result, the above-mentioned object is ach ieved.

The ladder according to embodiments herein is configured to be used for accessing a particular area, or space, of the vehicle when in the use position and is configured to be stored, i.e., not used for accessing the particular area, or space, of the vehicle, when in the storage position. An example of such a particular area, or space, may be an area, or a space, located above the vehicle frame and behind a cab of the vehicle.

The feature that the body panel covers the ladder as seen along the lateral direction of the vehicle towards the vehicle when the body panel is in the closed position and the ladder is in the storage position means that the body panel superimposes the ladder as seen along the lateral direction of the vehicle towards the vehicle when the body panel is in the closed position and the ladder is in the storage position.

Optionally, the vehicle is a heavy road vehicle comprising a vehicle frame and a cab mounted to the vehicle frame, and wherein the ladder is pivotally mounted to the vehicle frame at a position behind the cab as seen relative a forward moving direction of the vehicle. Thus, according to these embodiments, the ladder of the vehicle can be used to access the space above the vehicle frame and behind the cab as seen relative to forward moving direction of the vehicle.

Optionally, the vehicle comprises a vehicle frame, wherein the ladder is pivotally mounted to the vehicle body at a position above the vehicle frame at a lateral side of the vehicle. Thereby, no, or at least a low, impact is provided on the installation space of other components, systems, and arrangements to the vehicle frame at the longitudinal mounting position of the ladder on the vehicle. In other words, since the ladder is pivotally mounted to the vehicle body at a position above the vehicle frame at a lateral side of the vehicle, conditions are provided for mounting one or more other components, systems, and arrangements to the vehicle frame at the longitudinal mounting position of the ladder on the vehicle. For example, such a component may comprise a propulsion battery, a fuel tank, or the like.

Optionally, the ladder is pivotally mounted to the vehicle body around one pivot axis only. Thereby, conditions are provided for a robust and durable solution for allowing a user to access a particular area or space of the vehicle.

Optionally, the ladder may be arranged to extend from the vehicle frame in a direction towards the cab when in the storage position. The storage position may be a raised position.

Optionally, in the use position, the ladder may be arranged to extend from the vehicle frame in a direction towards a ground surface adjacent to the vehicle comprising the ladder. The use position may be a lowered position.

Optionally, the body panel may be arranged to cover a space or a gap of the vehicle as seen along the lateral direction of the vehicle towards the vehicle when the body panel is in the closed position. Moreover, the body panel may be arranged to expose the space or gap of the vehicle when being moved to the open position.

The above-mentioned space or gap may for example be a space or gap behind the cab, as seen relative a forward moving direction of the vehicle, a space or a gap above a vehicle frame of the vehicle as seen relative to the vertical direction of the vehicle, and/or a space or a gap between a cab and a cargo compartment of the vehicle.

Furthermore, in the open position, the body panel may be arranged to at least partially overlap/cover another body panel of the vehicle, sides of a cab of the vehicle, and/or an air deflector of the vehicle, as seen along the lateral direction of the vehicle towards the vehicle

Optionally, the vehicle comprises an element configured to prevent the ladder from being moved from the storage position to the use position when the body panel is in the closed position. Thereby, an even safer solution is provided allowing a user to access a particular area or space of the vehicle without having to use external equipment. This is because it can be ensured that the ladder is not accidentally pivoted from the storage position to the use position when the body panel is in the closed position. The feature that the element is configured to prevent the ladder from being moved from the storage position to the use position may mean that the element is configured to block the ladder from being moved from the storage position to the use position. Said element may also be referred to as blocking element.

Optionally, the element allows the ladder to be moved from the storage position to the use position when the body panel is in the open position. Thereby, a more intuitive and user-friendly solution is provided allowing users to access a particular area or space of the vehicle. This is because a user may simply move the body panel from the closed position to the open position to unlock the ladder such that the ladder can be moved from the storage position to the use position. In other words, the need for arranging a manually operated locking device for securing the ladder in the storage position is further circumvented.

Optionally, the element is operably connected to the hinge arrangement. Thereby, a simple, efficient, and reliable solution is provided for preventing the ladder from being moved from the storage position to the use position when the body panel is in the closed position and/or for allowing the ladder to be moved from the storage position to the use position when the body panel is in the open position

Optionally, the vehicle comprises a handlebar, and wherein the element is a portion of the handlebar. Thereby, an even simpler solution is provided for preventing the ladder from being moved from the storage position to the use position when the body panel is in the closed position and/or for allowing the ladder to be moved from the storage position to the use position when the body panel is in the open position. This is because the handlebar can serve two purposes, namely, to form a handlebar for a user when the user is using the ladder and to prevent the ladder from being moved from the storage position to the use position when the body panel is in the closed position.

Optionally, the vehicle comprises a handlebar operably connected to the hinge arrangement such that the handlebar assumes a use position when the body panel is moved to the open position and assumes a storage position when the body panel is moved to the closed position. "Assume" in this context may mean "is brought to". Since the handlebar is operably connected to the hinge arrangement, it can be ensured that no portions of the handlebar protrudes further out from lateral sides of the vehicle than the body panel when the handlebar is in the storage position and the body panel is in the closed position. In this manner, a safer vehicle can be provided while allowing users to use the ladder and the handlebar to access a particular area or space of the vehicle when the body panel is in the open position and the ladder is in the use position.

Moreover, as understood from the above, since the handlebar is operably connected to the hinge arrangement, an automatic solution is provided in a simple manner in which the handlebar is brought to the use position when the body panel is moved to the open position and is brought to the storage position when the body panel is moved to the closed position. Thereby, an even more ergonomic and user-friendly solution is provided allowing users to access a particular area or space of the vehicle.

According to embodiments herein, the handlebar is configured to form a support for a hand of a user when in the use position and is configured to be stored, i.e., not be used be used for supporting a hand of a user, when in the storage position.

According to embodiments herein, the handlebar may be arranged to protrude further out from a lateral centre plane of the vehicle, as measured along a lateral direction of the vehicle, than surrounding laterally outer portions of the vehicle, when the handlebar is in the use position. Moreover, the handlebar may be arranged to not protrude further out from the lateral centre plane of the vehicle, as measured along a lateral direction of the vehicle, than surrounding laterally outer portions of the vehicle when the handlebar is in storage position. The surrounding laterally outer portions of the vehicle, referred to above, may for example comprise laterally outer portions of adjacent body panels, side surfaces of a cab of the vehicle, and the like.

Furthermore, the handlebar may be arranged such that the handlebar is covered by a portion of the vehicle, as seen along a lateral direction of the vehicle towards the vehicle, when the handlebar is in storage position. According to some embodiments, the above-mentioned portion may be a portion of the body panel, i.e., a portion of the body panel which is configured to cover the ladder as seen along the lateral direction of the vehicle towards the vehicle when the body panel is in the closed position and the ladder is in the storage position.

Optionally, the hinge arrangement comprises a set of hinge links, and wherein the handlebar is operably connected to the body panel via at least one hinge link of the set of hinge links. Thereby, a structural simple solution is provided for moving the handlebar towards the use position upon movement of the body panel towards the open position and for moving the handlebar towards the storage position upon movement of the body panel towards the closed position. Moreover, since the solution is structurally simple, conditions are provided for a rigid and durable solution.

Optionally, the ladder is configured to prevent the body panel from being moved from the open position to the closed position when the ladder is in the use position. Thereby, an even safer vehicle is provided because the risk that a user forgets to move the ladder from the use position to the storage position after use of the ladder is significantly reduced. This is because the body panel may be a significantly larger structural component of the vehicle than the ladder making the likelihood of forgetting to close the body panel significantly smaller than the likelihood of forgetting to move the ladder to the storage position. The feature that the ladder is configured to prevent the body panel from being moved from the open position to the closed position may mean that the ladder is configured to block the body panel from being moved from the open position to the closed position.

Moreover, according to some embodiments, the body panel is arranged behind the cab as seen relative a forward moving direction of the vehicle. According to such embodiments, a driver of a vehicle may observe that the body panel is in the open position, for example when viewing in a rear-view mirror of the vehicle, or the like.

Optionally, the pivot axis is transversal to a longitudinal direction of the vehicle as well as the lateral direction of the vehicle. Thereby, conditions are provided for an even more space efficient solution providing conditions for no, or at least a low, impact on the installation space of other components, systems, and arrangements of the vehicle. This is because the pivot axis being transversal to the longitudinal direction of the vehicle as well as to the lateral direction of the vehicle can cause a pivoting movement of the ladder having movement vector components in the longitudinal direction of the vehicle as well as in the lateral direction of the vehicle.

Optionally, the angle between the pivot axis and a longitudinal direction of the vehicle is within the range of 15 - 75 degrees or is within the range of 30 - 60 degrees. Thereby, conditions are provided for an even more space efficient solution providing conditions for no, or at least a low, impact on the installation space of other components, systems, and arrangements of the vehicle. Furthermore, since the angle between the pivot axis and a longitudinal direction of the vehicle is within the range of 15 - 75 degrees or is within the range of 30 - 60 degrees, conditions are provided for a solution in which the extension direction of steps of the ladder is substantially parallel to the longitudinal direction of the vehicle when the ladder is in the use position and in which the extension direction of steps of the ladder is substantially perpendicular to the longitudinal direction of the vehicle when the ladder is in the storage position. Thereby, conditions are provided for an even more space efficient solution providing conditions for no, or at least a low, impact on the installation space of other components, systems, and arrangements of the vehicle.

Optionally, the vehicle has a lateral longitudinal plane comprising a longitudinal direction of the vehicle as well as the lateral direction of the vehicle, and wherein the pivot axis is transversal to the lateral longitudinal plane of the vehicle. Thereby, conditions are provided for an even more space efficient solution providing conditions for no, or at least a low, impact on the installation space of other components, systems, and arrangements of the vehicle. This is because a more advantageous movement path of the ladder can be obtained between the storage position and the use position.

Optionally, the vehicle has a lateral longitudinal plane comprising a longitudinal direction of the vehicle as well as the lateral direction of the vehicle, and wherein the angle between the pivot axis and the lateral longitudinal plane of the vehicle is within the range of 1 - 45 degrees or is within the range of 3 - 18 degrees. Thereby, conditions are provided for an even more space efficient solution providing conditions for no, or at least a low, impact on the installation space of other components, systems, and arrangements of the vehicle. This is because a more advantageous movement path of the ladder can be obtained between the storage position and the use position.

Optionally, the pivot axis is angled relative to the vehicle body such that at least a movement vector component of a portion of the ladder coincides with a reverse moving direction of the vehicle when the ladder is pivoted from the storage position. This means that a movement vector component of a portion of the ladder coincides with a forward moving direction of the vehicle when the ladder is pivoted to the storage position. Thereby, conditions are provided for an even more space efficient solution providing conditions for no, or at least a low, impact on the installation space of other components, systems, and arrangements of the vehicle.

Optionally, the pivot axis is angled relative to the vehicle body such that at least a movement vector component of a portion of the ladder coincides with a lateral direction of the vehicle when the ladder is pivoted from the use position. Thereby, conditions are provided for an even more space efficient solution providing conditions for no, or at least a low, impact on the installation space of other components, systems, and arrangements of the vehicle. This is because one or more other components, systems, and arrangements of the vehicle may be mounted below the pivot axis of the ladder without impairing a movement path of the ladder.

Optionally, a maximum pivoting angle of the ladder around the pivot axis between the storage position and use position is within the range of 100 - 210 degrees or is within the range of 135 - 195 degrees. Thereby, conditions are provided for an even more space efficient solution providing conditions for no, or at least a low, impact on the installation space of other components, systems, and arrangements of the vehicle. This is because one or more other components, systems, and arrangements of the vehicle may be mounted below the pivot axis of the ladder without impairing a movement path of the ladder.

Optionally, the vehicle is a heavy road vehicle comprising a vehicle frame, and wherein the ladder is mounted to the vehicle at a position above the vehicle frame as seen relative to a vertical direction of the vehicle. Thereby, no, or at least a low, impact is provided on the installation space of other components, systems, and arrangements to the vehicle frame at the longitudinal mounting position of the ladder. In other words, since the ladder is mounted to the vehicle at a position above the vehicle frame as seen relative to the vertical direction of the vehicle, conditions are provided for mounting one or more other components, systems, and arrangements to the vehicle frame at the longitudinal mounting position of the ladder on the vehicle. For example, such a component may comprise a propulsion battery, a fuel tank, or the like.

Optionally, the vehicle is a heavy road vehicle comprising a vehicle frame, and wherein the ladder is configured to provide access to a space above the vehicle frame as seen relative to a vertical direction of the vehicle. Thereby, a safer solution is provided allowing a user to access to the space above the vehicle frame without having to use external equipment for accessing the space, while having no, or at least a low, impact on the installation space for other components, systems, and arrangements on the vehicle.

Optionally, the vehicle is a heavy road vehicle comprising a vehicle frame and a cab mounted to the vehicle frame, and wherein the body panel is arranged behind the cab as seen relative a forward moving direction of the vehicle. Thereby, the body panel may function as an air deflector for deflecting air around edges of a cargo compartment of the vehicle upon movement of the vehicle in the forward moving direction thereof.

Moreover, the feature that the body panel covers the ladder as seen along the lateral direction of the vehicle towards the vehicle when the body panel is in the closed position and the ladder is in the storage position means that the ladder is arranged behind the body panel as seen along the lateral direction of the vehicle towards the vehicle when the body panel is in the closed position and the ladder is in the storage position. Consequently, in these embodiments, the ladder is also arranged behind the cab as seen relative a forward moving direction of the vehicle. Thereby, a safer solution is provided allowing a user to access to the space behind the cab without having to use external equipment for accessing the space, while having no, or at least a low, impact on the installation space for other components, systems, and arrangements on the vehicle.

Optionally, the hinge arrangement is configured such that at least a first movement vector component of the body panel coincides with a forward moving direction of the vehicle when the body panel is moved towards the open position. Thereby, the body panel has conditions for being moved in a simple, intuitive, and space- efficient manner from the closed position towards the open position.

The feature that at least a first movement vector component of the body panel coincides with a forward moving direction of the vehicle when the body panel is moved towards the open position means that the body panel moves, at least to some extent, in the forward moving direction of the vehicle when the body panel is moved towards the open position.

Optionally, the hinge arrangement is configured such that at least a second movement vector component of the body panel coincides with a lateral direction of the vehicle when the body panel is moved towards the open position. Thereby, the body panel has conditions for being moved in a simple, intuitive, and space- efficient manner from the closed position towards the open position. Moreover, conditions are provided for accommodating another component, such as another body panel, located in front of the body panel as seen in the forward moving direction of the vehicle when the body panel is in the closed position.

The feature that that at least a second movement vector component of the body panel coincides with a lateral direction of the vehicle when the body panel is moved towards the open position means that the body panel moves, at least to some extent, in the lateral direction of the vehicle when the body panel is moved towards the open position.

As a further result of these features, a driver of a vehicle may more easily observe that the body panel is in the open position, for example when viewing in a rear-view mirror of the vehicle, or the like.

Optionally, the body panel is an air deflector. Thereby, a body panel is provided capable of serving two purposes, namely to cover the ladder seen along the lateral direction of the vehicle when the body panel is in the closed position and to deflect air during travel of the vehicle, for example around edges of a cargo compartment of the vehicle.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 illustrates a vehicle according to some embodiments,
Fig. 2 illustrates a perspective view of a vehicle arrangement of the vehicle illustrated in Fig. 1,
Fig. 3 illustrates a first side view of the vehicle arrangement illustrated in Fig. 2,
Fig. 4 illustrates a second side view of the vehicle arrangement illustrated in Fig. 2,
Fig. 5 illustrates a first enlarged perspective view of a portion of the vehicle arrangement illustrated in Fig. 2,
Fig. 6 illustrates a second enlarged perspective view of a portion of the vehicle arrangement illustrated in Fig. 2,
Fig. 7 illustrates a third enlarged perspective view of a portion of the vehicle arrangement illustrated in Fig. 2,
Fig. 8 illustrates a fourth enlarged perspective view of a portion of the vehicle arrangement illustrated in Fig. 2, and
Fig. 9 illustrates a rear view of a portion of the vehicle arrangement illustrated in Fig. 2.

### DETAILED DESCRIPTION

Aspects of the present invention will now be described more fully. Like numbers refer to like elements throughout. Well-known functions or constructions will not necessarily be described in detail for brevity and/or clarity.

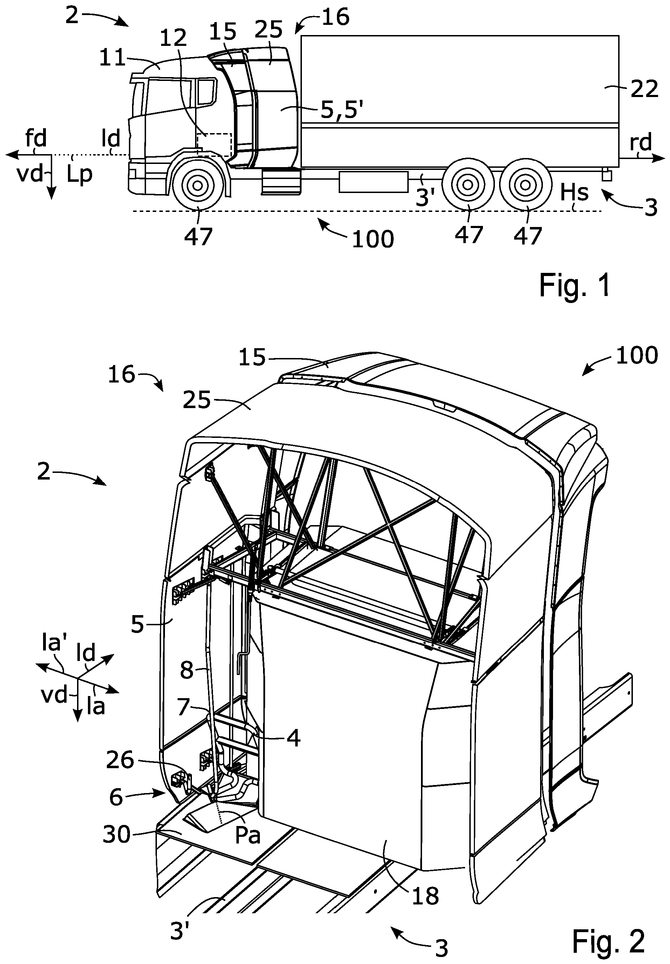

**Fig. 1** illustrates a vehicle 2 according to some embodiments. According to the illustrated embodiments, the vehicle 2 is a truck, i.e., a type of heavy road vehicle.

The vehicle 2 comprises a vehicle body 3 and a number of wheels 47 supporting the vehicle 2 during use of the vehicle 2. Moreover, the vehicle 2 comprises a powertrain 12 configured to provide motive power to the vehicle 2 via one or more wheels 47 of the vehicle 2. According to the illustrated embodiments, the powertrain 12 comprises a number of electric propulsion machines for providing motive power to the vehicle 2.

The vehicle 2 according to the illustrated embodiments is a pure electric vehicle and comprises no internal combustion engine for providing motive power to the vehicle 2. However, according to further embodiments, the vehicle 2 may comprise an internal combustion engine in addition to the number of electric propulsion machines, or instead of the electrical machines, for providing motive power to the vehicle 2.

In Fig. 1, the vehicle 2 is illustrated as positioned onto a flat horizontal surface Hs in an intended use position thereon. As can be seen in Fig. 1, the wheels 47 of the vehicle 2 are abutting against the flat horizontal surface Hs when the vehicle 2 is positioned in the intended upright use position on the flat horizontal surface Hs. The vehicle 2 has a longitudinal direction Id. The longitudinal direction Id of the vehicle 2 is parallel to the flat horizontal surface Hs when the vehicle 2 is positioned in the intended upright use position thereon.

Moreover, a vertical direction vd of the vehicle 2 is indicated in Fig. 1. The vertical direction vd of the vehicle 2 is perpendicular to the flat horizontal surface Hs when the vehicle 2 is positioned thereon in the intended use position. Moreover, the vertical direction vd of the vehicle 2 coincides with the direction of a local gravity vector at the location of the vehicle 2 when the vehicle 2 positioned onto a flat horizontal surface Hs in an intended use position. The vertical direction vd of the vehicle 2 is perpendicular to the longitudinal direction Id of the vehicle 2.

In Fig. 1, a forward moving direction fd of the vehicle 2 is illustrated. The forward moving direction fd of the vehicle 2 is parallel to the longitudinal direction Id of the vehicle 2 as well as to a reverse moving direction rd of the vehicle 2. The reverse moving direction rd of the vehicle 2 is opposite to the forward moving direction fd of the vehicle 2.

The vehicle 2 comprises a vehicle frame 3'. According to the illustrated embodiments, the vehicle frame 3' comprises a pair of elongated frame beams each having a direction of elongation being substantially parallel to the longitudinal direction Id of the vehicle 2.

Moreover, the vehicle 2 comprises a cab 11, wherein the cab 11 is attached to the vehicle frame 3'. The cab 11 may be resiliently attached to the vehicle frame 3' to allow a relative movement between cab 11 and the vehicle frame 3'. That is, the cab 11 may be resiliently attached to the vehicle frame 3' via a number of resilient members, such as a number of mechanical springs and/or a number of pneumatic springs. In this manner, the transfer of impacts and vibrations between the vehicle frame 3' and the cab 11 can be reduced.

The vehicle 2 further comprises an air deflector arrangement 16. The air deflector arrangement 16 comprises a set of air deflectors 15, 25, 5', including a front air deflector 15, a top air deflector 25, and a side air deflector 5'. The side air deflector 5' is also referred to as a body panel 5 herein. However, each air deflector 15, 25, 5' of the set of air deflectors 15, 25, 5' may also be referred to as a body panel because each air deflector 15, 25, 5' forms at least part of an outer surface of the vehicle 2 comprising the set of air deflectors 15, 25, 5'.

The vehicle 2 further comprises a cargo compartment 22. The air deflector arrangement 16 is arranged between the cab 11 of the vehicle 2 and the cargo compartment 22 of the vehicle 2. The air deflector arrangement 16 is configured to deflect air around edges of the cargo compartment 22 during travelling of the vehicle 2 in the forward moving direction fd of the vehicle 2. In this manner, the air-resistance of the vehicle 2, as well as wind noise, can be reduced upon movement of the vehicle 2 in the forward moving direction fd.

In Fig. 1, the vehicle 2 is illustrated as seen straight towards one side of the vehicle 2 along a lateral direction of the vehicle 2 towards the vehicle 2. The lateral direction of the vehicle 2 is perpendicular to each of the longitudinal direction Id of the vehicle 2 and the vertical direction vd of the vehicle 2

**Fig. 2** illustrates a perspective view of a vehicle arrangement 100 of the vehicle 2 illustrated in Fig. 1. The vehicle arrangement 100 comprises the air deflector arrangement 16, the vehicle frame 3' of the vehicle body 3, and a propulsion battery pack 18 of the vehicle 2. In other words, the air deflector arrangement 16, the vehicle frame 3' of the vehicle body 3, and the propulsion battery pack 18 is in some places below together referred to as a vehicle arrangement 100. The vehicle 2 illustrated in Fig. 1 thus comprises a vehicle arrangement 100 according to the embodiments illustrated in Fig. 2.

In other words, Fig. 2 can be said to illustrate a perspective view of the vehicle 2 illustrated in Fig. 1, where most of the components and arrangements of the vehicle 2, except the components comprised in the vehicle arrangement 100, have been omitted for reasons of brevity and clarity. Therefore, the reference sign "2" for the vehicle 2 is also indicated in Fig. 2. The vehicle body 3 has been provided with the reference sign "3" in Fig. 2 because the vehicle frame 3' form part of the vehicle body 3. Below, simultaneous reference is made to Fig. 1 - Fig. 2, if not indicated otherwise.

The propulsion battery pack 18 is configured to provide electricity to the number of electric machines of the vehicle 2 referred to above. The propulsion battery pack 18 may comprise a number of battery modules, each comprising a number of rechargeable battery cells, such as such as lithium-ion battery cells, lithium polymer batteries cells, nickel-metal hydride battery cells, or the like.

As seen when comparing Fig. 1 and Fig. 2, according to the illustrated embodiments, the propulsion battery pack 18 is arranged at a position behind the cab 11, as seen relative to the forward moving direction fd of the vehicle 2, and above the vehicle frame 3', as seen relative to the vertical direction vd of the vehicle 2. Moreover, according to the illustrated embodiments, the air deflector arrangement 16 at least in part encloses the propulsion battery pack 18.

In Fig. 2, a lateral direction Ia of the vehicle 2 towards the vehicle 2 is indicated. Moreover, a lateral direction la' of the vehicle 2 away from the vehicle 2 is indicated. The lateral direction la' away from the vehicle 2 is opposite to the lateral direction Ia towards the vehicle 2. However, each of the lateral directions la, la' of the vehicle 2 is perpendicular to the longitudinal direction Id of the vehicle 2 and is perpendicular to the vertical direction vd of the vehicle 2.

The lateral direction Ia of the vehicle 2 towards the vehicle 2 may also be referred to as a lateral direction Ia of the vehicle 2 pointing towards a vehicle centre of the vehicle 2. Likewise, the lateral direction la' of the vehicle 2 away from the vehicle 2 may also be referred to as a lateral direction la' of the vehicle 2 pointing away from a vehicle centre of the vehicle 2. The vehicle centre of the vehicle 2, as referred to herein, may be a lateral centre of the vehicle 2, such as a lateral centre plane of the vehicle 2. A lateral centre plane of a vehicle 2 is a plane with equal distances to laterally outer portions of the vehicle 2.

Moreover, as can be seen in Fig. 2, the vehicle 2 comprises a ladder 4. The ladder 4 is pivotally mounted to the vehicle body 3 around a pivot axis Pa between a storage position and a use position. In Fig. 2, the ladder 4 is illustrated in the storage position. As is further explained herein, the ladder 4 is configured to be used when in the use position and is configured to be stored, i.e., not used, when in the storage position. A storage position, as referred to herein, may also be referred to as a storing position.

Moreover, the vehicle 2 comprises a hinge arrangement 6. The body panel 5 is movably attached to the vehicle body 3 via the hinge arrangement 6 between an open position and a closed position. In Fig. 2, the body panel 5 is illustrated in the closed position. As seen in Fig. 1, according to the illustrated embodiments, the body panel 5 is arranged behind the cab 11 as seen relative a forward moving direction fd of the vehicle 2.

According to the illustrated embodiments, the vehicle 2 comprises a support frame 30. The support frame 30 may be attached to the vehicle frame 3' via a number of consoles, brackets, fastening elements, and the like, which are not illustrated in Fig. 2 for reasons of brevity and clarity. The support frame 30 form part of the vehicle body 3 referred to herein. According to the illustrated embodiments, the ladder 4 is pivotally mounted to the support frame 30 of the vehicle body 3 around the pivot axis Pa in a hinge mechanism between the storage position and the use position. According to the illustrated embodiments, the support frame 30 is plate-like and may also be referred to as a support plate.

As mentioned above, according to the illustrated embodiments, the body panel 5 is an air deflector 5' of the air deflector arrangement 16. In other words, according to the illustrated embodiments, the body panel 5 form part of the air deflector arrangement 16 and is configured to deflect air around edges of the cargo compartment 22 of the vehicle 2, at least when the body panel 5 is in the closed position as is illustrated in Fig. 1 and Fig. 2.

As can be seen in Fig. 1 and Fig. 2, the body panel 5 and the ladder 4 are arranged such that the body panel 5 covers the ladder 4 as seen along the lateral direction Ia of the vehicle 2 towards the vehicle 2 when the body panel 5 is in the closed position and the ladder 4 is in the storage position.

In Fig. 1, the vehicle 2 is illustrated as seen straight towards one side of the vehicle 2 along the lateral direction Ia of the vehicle 2 illustrated in Fig. 2. Moreover, in Fig. 1, the body panel 5 is illustrated in the closed position. Moreover, as mentioned, the body panel 5 and the ladder 4 are arranged such that the body panel 5 covers the ladder 4 as seen along the lateral direction Ia of the vehicle 2 towards the vehicle 2 when the body panel 5 is in the closed position and the ladder 4 is in the storage position. Therefore, the ladder 4 is not visible in Fig. 1

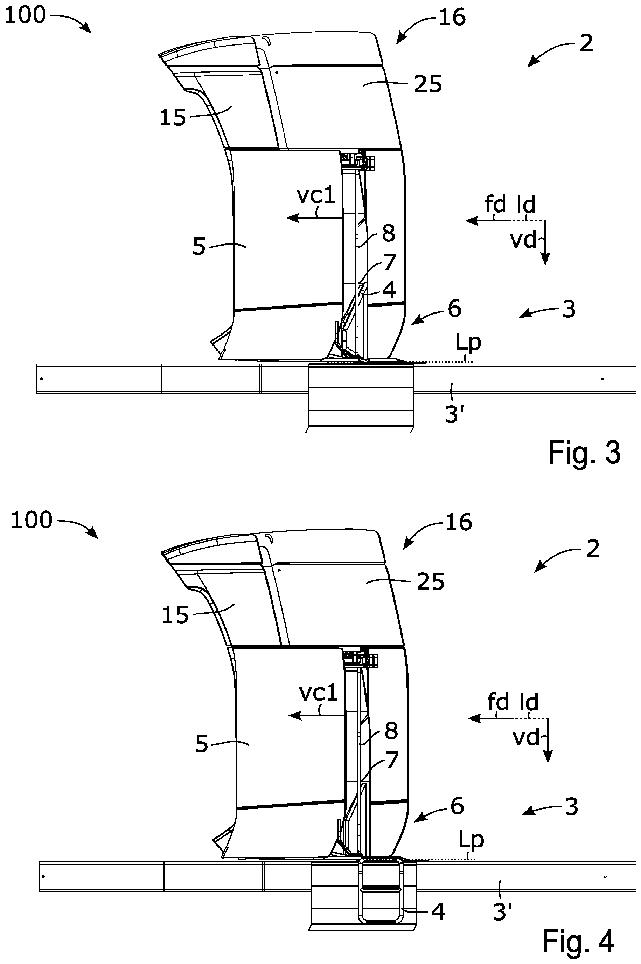

**Fig. 3** illustrates a first side view of the vehicle arrangement 100 illustrated in Fig. 2. In Fig. 3, the vehicle arrangement 100 is illustrated as seen in the lateral direction Ia towards the vehicle 2 indicated in Fig. 2. In Fig. 3, the body panel 5 is illustrated in the open position. In other words, as compared to in Fig. 1 and Fig. 2, the body panel 5 has been moved from the closed position to the open position.

As mentioned, the vehicle 2 comprises a hinge arrangement 6, wherein the body panel 5 is movably attached to the vehicle body 3 via the hinge arrangement 6 between the open and closed positions. According to the illustrated embodiments, the hinge arrangement 6 is configured such that at least a first movement vector component vc1 of the body panel 5 coincides with a forward moving direction fd of the vehicle 2 when the body panel 5 is moved towards the open position. In other words, the body panel 5 is moved at least to some extent in the forward moving direction fd of the vehicle 2 when the body panel 5 is moved from the closed position, illustrated in Fig. 1 and Fig. 2, to the open position, illustrated in Fig. 3.

In Fig. 3, the ladder 4 is illustrated in the storage position. As can be seen in Fig. 3, according to the illustrated embodiments, the ladder 4 is visible from the lateral direction of the vehicle 2 towards the vehicle 2 when the body panel 5 is in the open position and the ladder 4 is in the storage position. However, according to further embodiments, the ladder 4 may be covered, at least in part, by the body panel 5 as seen along a lateral direction of the vehicle 2 towards the vehicle 2 when the body panel 5 is in the open position and the ladder 4 is in the storage position.

**Fig. 4** illustrates a second side view of the vehicle arrangement 100 illustrated in Fig. 2. Also in Fig. 4, the vehicle arrangement 100 is illustrated as seen in the lateral direction Ia towards the vehicle 2 indicated in Fig. 2. In Fig. 4, the body panel 5 is illustrated in the open position and the ladder 4 is illustrated in the use position. As can be seen in Fig. 4, according to the illustrated embodiments, the ladder 4 is visible from the lateral direction of the vehicle 2 when the body panel 5 is in the open position and the ladder 4 is in the use position.

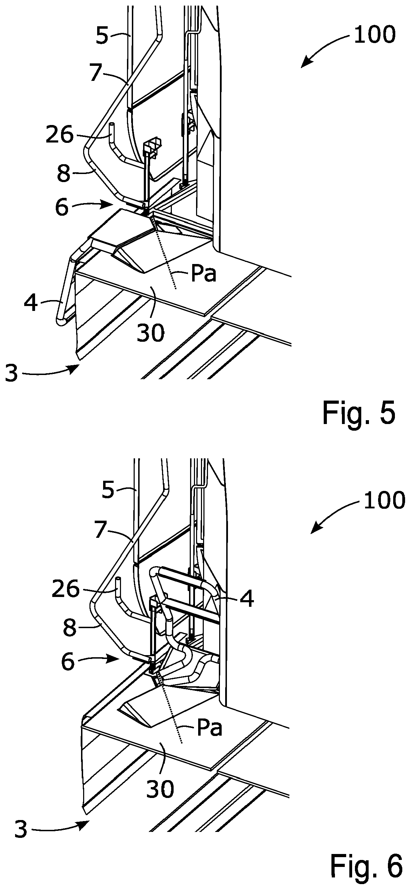

**Fig. 5** illustrates a first enlarged perspective view of a portion of the vehicle arrangement 100 illustrated in Fig. 2. In Fig. 5, the body panel 5 is illustrated in the open position and the ladder 4 is illustrated in the use position. Moreover in Fig. 5, the pivot axis Pa of the ladder 4 is indicated in dotted lines. As mentioned, the ladder 4 is pivotally mounted to the vehicle body 3 around the pivot axis Pa between the storage position and the use position.

**Fig. 6** illustrates a second enlarged perspective view of the portion of the vehicle arrangement 100 illustrated in Fig. 2. In Fig. 6, the body panel 5 is illustrated in the open position and the ladder 4 is illustrated in the storage position.

In other words, in comparison with Fig. 5, the ladder 4 has been pivoted from the use position to the storage position. According to the illustrated embodiments, a user is free to pivot the ladder 4 between the use and storage positions when the body panel 5 is in the open position.

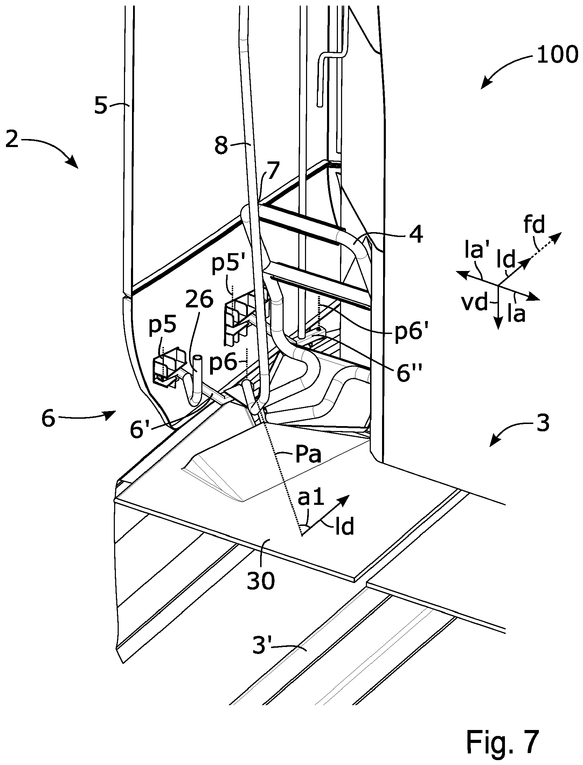

**Fig. 7** illustrates a third enlarged perspective view of a portion of the vehicle arrangement 100 illustrated in Fig. 2. In Fig. 7, the body panel 5 is illustrated in the closed position and the ladder 4 is illustrated in the storage position.

According to the illustrated embodiments, the vehicle 2 comprises an element 7 configured to prevent the ladder 4 from being moved from the storage position to the use position when the body panel 5 is in the closed position. Moreover, according to the illustrated embodiments, the element 7 is operably connected to the hinge arrangement 6.

In more detail, according to the illustrated embodiments, the hinge arrangement 6 comprises a set of hinge links 6', 6". The set of hinge links 6', 6" comprises two hinge links 6', 6" spaced apart along the longitudinal direction Id of the vehicle 2. Moreover, according to the illustrated embodiments, each hinge link 6', 6" of the set of hinge links 6', 6" is pivotally attached to the vehicle body 3 around a body pivot axis p6, p6' and is pivotally attached to the body panel 5 around a panel pivot axis p5, p5'.

According to the illustrated embodiments, each of the body pivot axes p6, p6' and the panel pivot axes p5, p5' are substantially parallel to the vertical direction vd of the vehicle 2. In this manner, the set of hinge links 6', 6' form a type of parallelogram arrangement causing the body panel 5 to move at least in part in a lateral direction la' away from a vehicle centre of the vehicle 2 as well as at least in part in the forward moving direction fd of the vehicle 2 when the body panel 5 is moved from the closed position towards the open position. As understood from the above, each hinge link 6', 6" of the set of hinge links 6', 6" turns around its respective body pivot axis p6, p6' when the body panel 5 is moved between the open and closed positions.

According to the illustrated embodiments, the handlebar 8 is operably connected to the body panel 5 by being connected to one hinge link 6' of the set of hinge links 6', 6". However, since each hinge link 6', 6" of the set of hinge links 6', 6" moves in unison with the body panel 5, the handlebar 8 can be said to be operably connected to the body panel 5 by being operably connected to each hinge link 6' of the set of hinge links 6', 6" of the hinge arrangement 6.

According to the illustrated embodiments, the handlebar 8 is operably connected to the hinge arrangement 6 such that the handlebar 8 assumes a use position when the body panel 5 is moved to the open position and assumes a storage position when the body panel 5 is moved to the closed position. Accordingly, in Fig. 7, the handlebar 8 is illustrated in the storage position because the body panel 5 is illustrated in the closed position. The use position of the handlebar 8 is further explained below.

As is clearly seen in Fig. 7, according to the illustrated embodiments, the element 7, which is configured to prevent the ladder 4 from being moved from the storage position to the use position when the body panel 5 is in the closed position, is a portion of the handlebar 8.

According to the illustrated embodiments, the portion of the handlebar 8 is configured to prevent the ladder 4 from being moved from the storage position to the use position when the handlebar 8 is in the storage position by obstructing the movement path of the ladder 4 from the storage position towards the use position.

In other words, according to the illustrated embodiments, the ladder 4 is prevented from being moved from the storage position to the use position when the body panel 5 is in the closed position by an abutting contact against the portion of the handlebar 8. Thus, according to the illustrated embodiments, the handlebar 8 locks the ladder 4 in the storage position when the body panel 5 is in the closed position.

In Fig. 5 and Fig. 6, the body panel 5 is illustrated in the open position and as can be seen in these figures, the handlebar 8 has been brought to the use position. In other words, upon a movement of the body panel 5 from the closed position illustrated in Fig. 7 to the open position illustrated in Fig. 5 and Fig. 6, the handlebar 8 is moved from the storage position illustrated in Fig. 7 to the use position illustrated in Fig. 5 and Fig. 6. Since the handlebar 8 is moved from the storage position to the use position upon a movement of the body panel 5 from the closed position to the open position, the ladder 4 is free to move between the storage and use positions when the body panel 5 is in the open position.

As is indicated in Fig. 7, as well as in Fig. 2, Fig. 5, and Fig. 6, the vehicle 2 comprises a handle 26 operably connected to the body panel 5. As is best seen in Fig. 7, according to the illustrated embodiments, the handle 26 is operably connected to the body panel 5 by being connected to one hinge link 6' of the set of hinge links 6', 6". The handle 26 facilitates the process of moving/displacing the body panel 5 from the closed position to the open position, as well as facilitates the process of moving/displacing the body panel 5 from the open position to the closed position.

Moreover, according to the illustrated embodiments, the ladder 4 is configured to prevent the body panel 5 from being moved from the open position to the closed position when the ladder 4 is in the use position. That is, when the ladder 4 is in the use position, as illustrated in Fig. 5, the ladder 4 prevents the body panel 5 from being moved to the closed position. According to the illustrated embodiments, the ladder 4 is configured to prevent the body panel 5 from being moved from the open position to the closed position by preventing the handlebar 8 from being moved from the use position to the storage position when the ladder is in the use position. According to the illustrated embodiments, the ladder is configured to prevent/hinder the handlebar 8 from being moved from the use position to the storage position by obstructing the travel path of the handlebar 8 from the use position towards the storage position.

As is best seen in Fig. 7, according to the illustrated embodiments, the pivot axis Pa is transversal to a longitudinal direction Id of the vehicle 2 as well as to the lateral direction Ia of the vehicle 2. Moreover, according to the illustrated embodiments, the angle a1 between the pivot axis Pa and the longitudinal direction Id of the vehicle 2 is approximately 47 degrees. According to further embodiments, the angle a1 between the pivot axis Pa and a longitudinal direction Id of the vehicle 2 may be within the range of 15 - 75 degrees or may be within the range of 30 - 60 degrees.

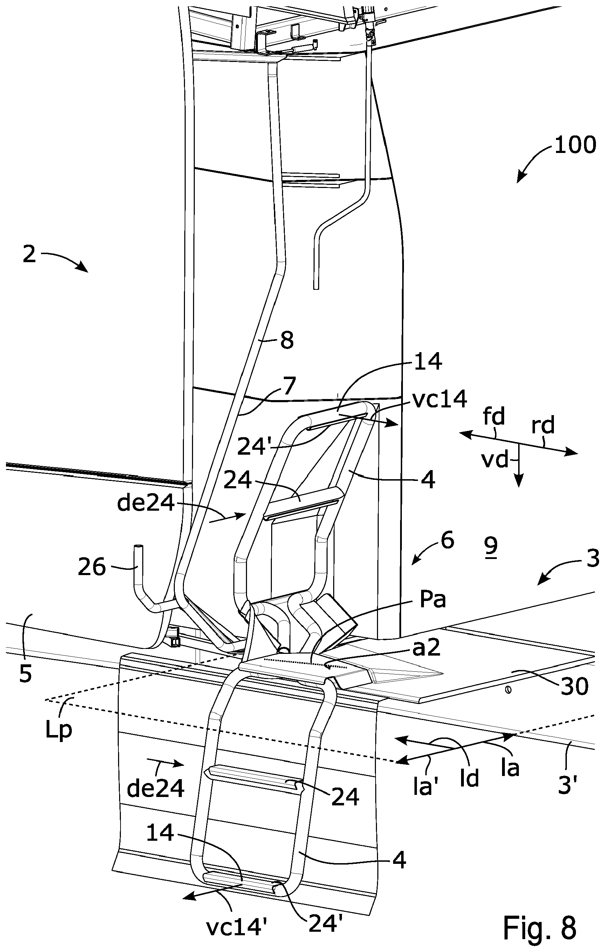

**Fig. 8** illustrates a fourth enlarged perspective view of a portion of the vehicle arrangement 100 illustrated in Fig. 2. In Fig. 8, the ladder 4 has been illustrated as positioned in the storage position as well as in the use position. The vehicle arrangement 100 according to the embodiments herein comprises one ladder 4 only and the ladder 4 has been illustrated as positioned in the storage position as well as in the use position in Fig. 8 for illustrative purposes.

In Fig. 8, a lateral longitudinal plane Lp of the vehicle 2 is indicated in dashed lines. The lateral longitudinal plane Lp of the vehicle 2 is also indicated in Fig. 1, Fig. 3, and Fig. 4. The lateral longitudinal plane Lp comprises the longitudinal direction Id of the vehicle 2 as well as the lateral directions la, la' of the vehicle 2. In other words, the lateral longitudinal plane Lp is parallel to the longitudinal direction Id of the vehicle 2 as well as to the lateral directions la, la' of the vehicle 2.

As is best seen in Fig. 8, according to the illustrated embodiments, the pivot axis Pa is transversal to the lateral longitudinal plane Lp of the vehicle 2. In other words, according to the illustrated embodiments, the pivot axis Pa of the ladder 4 is not parallel to the lateral longitudinal plane Lp of the vehicle 2. Instead, the pivot axis Pa of the ladder 4 is arranged with an angle a2 relative to the lateral longitudinal plane Lp of the vehicle 2.

According to the illustrated embodiments, the angle a2 between the pivot axis Pa and the lateral longitudinal plane Lp of the vehicle 2 is approximately 13 degrees. According to further embodiments, the angle a2 between the pivot axis Pa and the lateral longitudinal plane Lp of the vehicle 2 may be within the range of 0 - 45 degrees or may be within the range of 3 - 18 degrees. Furthermore, according to some embodiments, the angle a2 between the pivot axis Pa and the lateral longitudinal plane Lp of the vehicle 2 is within the range of 0 - 5 degrees.

Due to these features, an advantageous movement path of the ladder 4 can be provided between the storage position and the use position and conditions are provided for an even more space efficient solution providing conditions for no, or at least a low, impact on the installation space of other components, systems, and arrangements of the vehicle 2.

According to the illustrated embodiments, the maximum pivoting angle of the ladder 4 around the pivot axis Pa between the storage position and use position is approximately 157 degrees. According to further embodiments, a maximum pivoting angle of the ladder 4 around the pivot axis Pa between the storage position and use position may be within the range of 100 - 210 degrees, or may be within the range of 130 - 195 degrees.

Moreover, as is indicated in Fig. 8, the pivot axis Pa is angled relative to the vehicle body 3 such that at least a movement vector component vc14 of a portion 14 of the ladder 4 coincides with a reverse moving direction rd of the vehicle 2 when the ladder 4 is pivoted from the storage position. In other words, according to the illustrated embodiments, the ladder 4 is configured such that at least a portion 14 of the ladder 4 moves at least in part in the reverse moving direction rd of the vehicle 2 when the ladder 4 is pivoted from the storage position. Thus, according to the illustrated embodiments, at least a portion 14 of the ladder 4 moves at least in part in the forward moving direction fd of the vehicle 2 when the ladder 4 is pivoted to the storage position.

As seen in Fig. 8, the ladder 4 comprises two footsteps 24, 24' each having a direction of elongation de24 being at least substantially parallel to the direction of elongation de24 of the other footstep 24, 24'. According to further embodiments, the ladder 4 may comprise another number of footsteps 24, 24'. As can be seen in Fig. 8, the ladder 4 is configured such that the direction of elongation de24 of a footstep 24, 24' of the ladder 4 is substantially parallel to the lateral directions la, la' of the vehicle 2 when the ladder 4 is in the storage position. Due to these features, an even more space efficient solution is provided having conditions for no, or at least a low, impact on the installation space of other components, systems, and arrangements of the vehicle 2.

Moreover, as seen in Fig. 8, according to the illustrated embodiments, the ladder 4 is configured such that the direction of elongation de24 of a footstep 24, 24' of the ladder 4 is substantially parallel to longitudinal direction Id of the vehicle 2 when the ladder 4 is in the use position. In this manner, a user can use the ladder to access to a space 9 above the vehicle frame 3' as seen relative to a vertical direction vd of the vehicle 2 in a user-friendly and convenient manner, as is further explained herein.

As understood from the above, the user can thus access the space 9 by opening the body panel 5, for example using the handle 26, and then pivot/fold the ladder 4 from the storage position to the use position. When the ladder 4 is in the use position, the user can walk up the ladder 4 by placing one or two feet on the footsteps 24, 24' of the ladder 4. The user may also place a hand on the handlebar 8 when walking up the ladder 4 which can provide a safer and more comfortable entrance to the space 9. Moreover, as understood from above, each footstep 24, 24' of the ladder 4 is configured to support a foot of a user by providing a normal force to the foot in a direction perpendicular to the direction of elongation de24 of the footstep 24, 24'.

As is indicated in Fig. 8, according to the illustrated embodiments, the pivot axis Pa is angled relative to the vehicle body 3 such that at least a movement vector component vc14' of a portion 14 of the ladder 4 coincides with a lateral direction la' of the vehicle 2 away from the vehicle centre of the vehicle 2 when the ladder 4 is pivoted from the use position. In other words, according to the illustrated embodiments, the ladder 4 is configured such that at least a portion 14 of the ladder 4 moves at least in part in the lateral direction la' of the vehicle 2 away from the vehicle centre of the vehicle 2 when the ladder 4 is pivoted from the use position. Thus, according to the illustrated embodiments, at least a portion 14 of the ladder 4 moves at least in part in the lateral direction Ia of the vehicle 2 towards the vehicle centre of the vehicle 2 when the ladder 4 is pivoted to the use position.

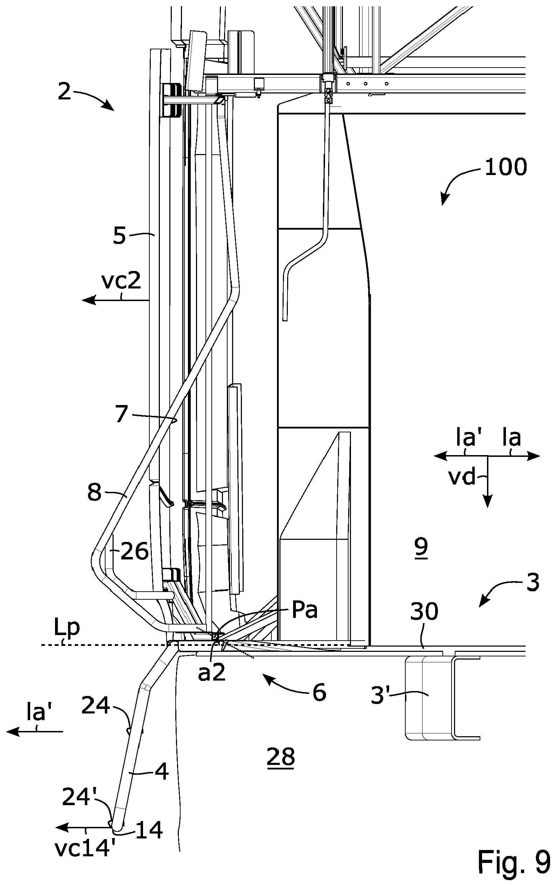

**Fig. 9** illustrates a rear view of a portion of the vehicle arrangement 100 illustrated in Fig. 2. In Fig. 9, the vehicle arrangement 100 is illustrated as seen along the forward moving direction fd of the vehicle 2 indicated in Fig. 1, Fig. 3, Fig. 4, Fig. 7, and Fig. 8.

In Fig. 9, the body panel 5 is illustrated in the open position and the ladder 4 is illustrated in the use position. As mentioned, according to the illustrated embodiments, the vehicle 2 is a heavy road vehicle 2 comprising a vehicle frame 3'. As is clearly seen in Fig. 9, as well as in other figures of the present disclosure, the pivot axis Pa of the ladder 4 is mounted to the vehicle 2 at a position above the vehicle frame 3' as seen relative to a vertical direction vd of the vehicle 2. Moreover, as mentioned, according to the illustrated embodiments, the ladder 4 is mounted to the vehicle frame 3' via the support frame 30. Furthermore, the ladder 4 is configured to provide access to a space 9 above the vehicle frame 3' as seen relative to a vertical direction vd of the vehicle 2.

As seen in Fig. 9, as well as in Fig. 8, the handlebar 8 protrudes further out from the vehicle 2 as seen in the lateral direction la' away from the vehicle 2 than the body panel 5 when the body panel 5 is in the open position and consequently when the handlebar 8 is in the use position. In this manner, a user may in an even safer and more convenient manner use the ladder 4 and the handlebar 8 when wanting to access the space 9 above the vehicle frame 3'.

Moreover, as seen in Fig. 9, as well as in Fig. 8, the handle 26 protrudes further out from the vehicle 2 as seen in the lateral direction la' away from the vehicle 2 than the body panel 5 when the body panel 5 is in the open position. In this manner, a user may in a more convenient manner use the handle 26 when wanting to close the body panel 5, i.e., when wanting to move/displace the body panel 5 from the open position to the closed position.

As indicated above, in Fig. 9, the vehicle arrangement 100 is illustrated as seen along the forward moving direction fd of the vehicle, i.e., as seen in a direction parallel to the longitudinal direction of the vehicle 2. As seen in Fig. 9, according to the illustrated embodiments, the direction of elongation of the footsteps 24, 24', explained with reference to Fig. 8 above, is at least substantially parallel to the longitudinal direction of the vehicle 2 when the ladder 4 is in the use position. Moreover, as mentioned, the ladder 4 according to the illustrated embodiments comprises two footsteps 24, 24', below referred to as a first footstep 24' and a second footstep 24.

As seen in Fig. 9, the ladder 4 is configured such that the first footstep 24' is arranged below the second footstep 24 as seen along the vertical direction vd of the vehicle 2 when the ladder 4 is in the use position. Moreover, the ladder 4 is configured such that the first footstep 24' is arranged further out from the vehicle centre as seen along the lateral direction la' away from the vehicle centre when the ladder 4 is in the use position. In this manner, a so-called stair effect is obtained allowing a user to climb up the ladder 4 in a more ergonomic, safe, and convenient manner.

Moreover, due to these features, and the fact that the ladder 4 is mounted to the vehicle 2 at a position above the vehicle frame 3' as seen relative to a vertical direction vd of the vehicle 2, the solution provides conditions for no, or at least a low, impact on the installation space for other components, systems, and arrangements on the vehicle 2. An example, of such an installation space has been provided with the reference sign "28" in Fig. 9. The installation space 28 indicated in Fig. 9 may for example be used to accommodate one or more vehicle components, such as a propulsion battery, a fuel tank, or the like. Such one or more vehicle components may for example be installed to the space 28 by being attached to the vehicle frame 3' of the vehicle 2.

As is indicated in Fig. 9, according to the illustrated embodiments, the hinge arrangement 6 is configured such that at least a second movement vector component vc2 of the body panel 5 coincides with a lateral direction la' of the vehicle 2 away from the vehicle centre of the vehicle 2 when the body panel 5 is moved towards the open position. Thus, according to the illustrated embodiments, the body panel 5 moves at least in part in the lateral direction la' of the vehicle 2 away from the vehicle centre of the vehicle 2 when the body panel 5 is moved towards the open position. The first movement vector component vc1 of the body panel 5 is explained with reference to Fig. 3 and Fig. 4 above.

As is best seen in Fig. 2 and Fig. 7, the body panel 5 covers the ladder 4 as seen along the lateral direction Ia of the vehicle 2 towards the vehicle centre of the vehicle 2, when the body panel 5 is in the closed position and the ladder 4 is in the storage position. In this manner, the body panel 5 can act as a shield between the ladder 4 and an object, such as a pedestrian or other type of road user, upon an impact between the object and the vehicle 2 at an angle towards the side of the vehicle.

Moreover, is best seen in Fig. 2 and Fig. 7, the body panel 5 and the ladder 4 are configured such that no portions of the ladder 4 protrudes further out from lateral sides of the vehicle 2 than the body panel 5 when the body panel 5 is in the closed position and the ladder 4 is in the storage position.

It is to be understood that the foregoing is illustrative of various example embodiments and that the invention is defined only by the appended independent claims. A person skilled in the art will realize that the example embodiments may be modified, and that different features of the example embodiments may be combined to create embodiments other than those described herein, without departing from the scope of the present invention, as defined by the appended independent claims.

As used herein, the term "comprising" or "comprises" is open-ended, and includes one or more stated features, elements, steps, components, or functions but does not preclude the presence or addition of one or more other features, elements, steps, components, functions, or groups thereof.

The wording "substantially parallel to", as used herein, may encompass that the angle between the objects referred to is less than 10 degrees, or is less than 7 degrees.

The wording "substantially perpendicular to", as used herein, may encompass that the angle between the objects referred to is within the range of 80 - 100 degrees or is within the range of 83 - 97 degrees.

## Claims

1. A vehicle (2) comprising:
- a vehicle body (3),
- a ladder (4) pivotally mounted to the vehicle body (3) around a pivot axis (Pa) between a storage position and a use position,
- a hinge arrangement (6), and
- a body panel (5) movably attached to the vehicle body (3) via the hinge arrangement (6) between an open and a closed position,
wherein the body panel (5) and the ladder (4) are arranged such that the body panel (5) covers the ladder (4) as seen along a lateral direction (la) of the vehicle (2) towards the vehicle (2) when the body panel (5) is in the closed position and the ladder (4) is in the storage position.

2. The vehicle (2) according to claim 1, wherein the vehicle (2) comprises an element (7) configured to prevent the ladder (4) from being moved from the storage position to the use position when the body panel (5) is in the closed position.

3. The vehicle (2) according to claim 2, wherein the element (7) is operably connected to the hinge arrangement (6).

4. The vehicle (2) according to claim 2 or 3, wherein the vehicle (2) comprises a handlebar (8), and wherein the element (7) is a portion of the handlebar (8).

5. The vehicle (2) according to any one of the preceding claims, wherein the vehicle (2) comprises a handlebar (8) operably connected to the hinge arrangement (6) such that the handlebar (8) assumes a use position when the body panel (5) is moved to the open position and assumes a storage position when the body panel (5) is moved to the closed position.

6. The vehicle (2) according to claim 5, wherein the hinge arrangement (6) comprises a set of hinge links (6', 6"), and wherein the handlebar (8) is operably connected to the body panel (5) via at least one hinge link (6') of the set of hinge links (6', 6").

7. The vehicle (2) according to any one of the preceding claims, wherein the ladder (4) is configured to prevent the body panel (5) from being moved from the open position to the closed position when the ladder (4) is in the use position.

8. The vehicle (2) according to any one of the preceding claims, wherein the pivot axis (Pa) is transversal to a longitudinal direction (Id) of the vehicle (2) as well as the lateral direction (la) of the vehicle (2).

9. The vehicle (2) according to any one of the preceding claims, wherein the angle (a1) between the pivot axis (Pa) and a longitudinal direction (Id) of the vehicle (2) is within the range of 15 - 75 degrees or is within the range of 30 - 60 degrees.

10. The vehicle (2) according to any one of the preceding claims, wherein the vehicle (2) has a lateral longitudinal plane (Lp) comprising a longitudinal direction (Id) of the vehicle (2) as well as the lateral direction (la, la') of the vehicle (2), and wherein the pivot axis (Pa) is transversal to the lateral longitudinal plane (Lp) of the vehicle (2).

11. The vehicle (2) according to any one of the preceding claims, wherein the vehicle (2) has a lateral longitudinal plane (Lp) comprising a longitudinal direction (Id) of the vehicle (2) as well as the lateral direction (la, la') of the vehicle (2), and wherein the angle (a2) between the pivot axis (Pa) and the lateral longitudinal plane (Lp) of the vehicle (2) is within the range of 1 - 45 degrees or is within the range of 3 - 18 degrees.

12. The vehicle (2) according to any one of the preceding claims, wherein the pivot axis (Pa) is angled relative to the vehicle body (3) such that at least a movement vector component (vc14) of a portion (14) of the ladder (4) coincides with a reverse moving direction (rd) of the vehicle (2) when the ladder (4) is pivoted from the storage position.

13. The vehicle (2) according to any one of the preceding claims, wherein the pivot axis (Pa) is angled relative to the vehicle body (3) such that at least a movement vector component (vc14') of a portion (14) of the ladder (4) coincides with a lateral direction (la') of the vehicle (2) when the ladder (4) is pivoted from the use position.

14. The vehicle (2) according to any one of the preceding claims, wherein a maximum pivoting angle of the ladder (4) around the pivot axis (Pa) between the storage position and use position is within the range of 100 - 210 degrees, or is within the range of 135-195 degrees.

15. The vehicle (2) according to any one of the preceding claims, wherein the vehicle (2) is a heavy road vehicle (2) comprising a vehicle frame (3'), and wherein the ladder (4) is mounted to the vehicle (2) at a position above the vehicle frame (3') as seen relative to a vertical direction (vd) of the vehicle (2).
